**Europäisches Patentamt**

**European Patent Office**

**Office européen des brevets**

(11) Veröffentlichungsnummer: **0 151 285**
**A2**

## (12) EUROPÄISCHE PATENTANMELDUNG

(21) Anmeldenummer: **84115580.7**

(22) Anmeldetag: **17.12.84**

(51) Int. Cl.⁴: **G 01 N 17/00**

(30) Priorität: **09.02.84 DE 3404639**

(43) Veröffentlichungstag der Anmeldung:
**14.08.85 Patentblatt 85/33**

(84) Benannte Vertragsstaaten:
**AT BE DE FR GB IT NL SE**

(71) Anmelder: **Siemens Aktiengesellschaft**
**Berlin und München Wittelsbacherplatz 2**
**D-8000 München 2(DE)**

(72) Erfinder: **Thieme, Roland**
**Bismarckstrasse 1**
**D-6729 Wörth 2(DE)**

(54) **Einbauarmatur für stabförmige Sonden.**

(57) In dem Führungsrohr (5) für die stabförmige Sonde (3) ist ein Drehschieber eingesetzt, der es erlaubt, die Öffnung (2) für die Sonde in einer Behälterwand zu verschließen, wenn die Sonde zu Wartungs- oder Austauschzwecken herausgenommen wird.

Der Drehschieber besteht aus drei einfachen Drehteilen: einem scheibenförmigen Verschlußstück (6), einem mit Gleitsitz darin drehbaren Schieberteil (10) und einer auf das Verschlußstück aufschraubbaren Überwurfmutter (12).

Die Einbauarmatur wird vorzugsweise in Verbindung mit Eintauchgebern, z. B. Leitfähigkeitsgebern, verwendet.

EP 0 151 285 A2

./...

FIG 1

Siemens Aktiengesellschaft  Unser Zeichen 0151285
Berlin und München  VPA 84 P 4407

## Einbauarmatur für stabförmige Sonden

Die Erfindung bezieht sich auf eine Einbauarmatur für stabförmige Sonden, insbesondere als Eintauchgeber ausgebildete Meßwertaufnehmer, mit einem an einer Öffnung in einer Behälterwand angebrachten, aus Abschnitten zusammengesetzten Führungsrohr für die Sonde und mit zwischen den Abschnitten eingefügten Mitteln zum Verschließen des Führungsrohrs.

Derartige Einbauarmaturen dienen dazu, beim Herausziehen der Sonde zu Wartungs- oder Austauschzwecken das Führungsrohr und damit die Öffnung in der Behälterwand zu verschließen.
Als Verschlußmittel ist bei einer bekannten Ausführung ein Drehventil vorgesehen mit quer zur Drehachse verlaufender Bohrung in dem kugel- oder kegelförmigen Ventilkörper, durch welche in Arbeitsstellung der Schaft der rohrförmigen Sonde geführt ist.
Wird die Sonde herausgezogen, so läßt sich das Ventil, noch während die Sonde in dem Führungsrohr dicht geführt ist, schließen, so daß ein Austreten des in dem Behälter befindlichen Stoffs verhindert wird.
Nachteilig bei einer derartigen Einbauarmatur ist die durch den Einbau des Ventilgehäuses des Drehventils bedingte Länge, die wiederum Sonden mit relativ langen stabförmigen Schäften erforderlich macht. Ein weiterer Nachteil ist der relativ aufwendige mechanische Aufbau, bei dem selbst bei sorgfältiger Ausrichtung der Rohrabschnitte und des Drehventils entstehende Stoßstellen im Führungsrohr zu einer Beschädigung der stabförmigen Sonde bei nicht ganz sachgemäßer Einführung bzw. ihrer am Sondenschaft befestigten Dichtungsmittel wie O-Ringe oder dergleichen führen kann.

Sp 4 Scl / 06.02.1984

**0151285**

Es besteht demgemäß die Aufgabe, eine Einbauarmatur der eingangs genannten Art mit kurzer Baulänge und mit relativ einfachem Aufbau zu schaffen.

Eine Lösung der Aufgabe wird mit der Lehre des Anspruchs 1 gegeben.

Anstelle der teuren und aufwendigen Drehventile treten flachbauende Drehschieber, die aus wenigen einfachen Drehteilen aufgebaut sind.

Bei einer bevorzugten Ausführungsform, bei der ein Dichtungsmittel zwischen stabförmiger Sonde und Führungsrohr oberhalb der Drehschieberebene angeordnet ist, sind keine das Dichtungsmittel, beispielsweise einen O-Ring, möglicherweise beschädigende Stoßstellen zu überfahren.

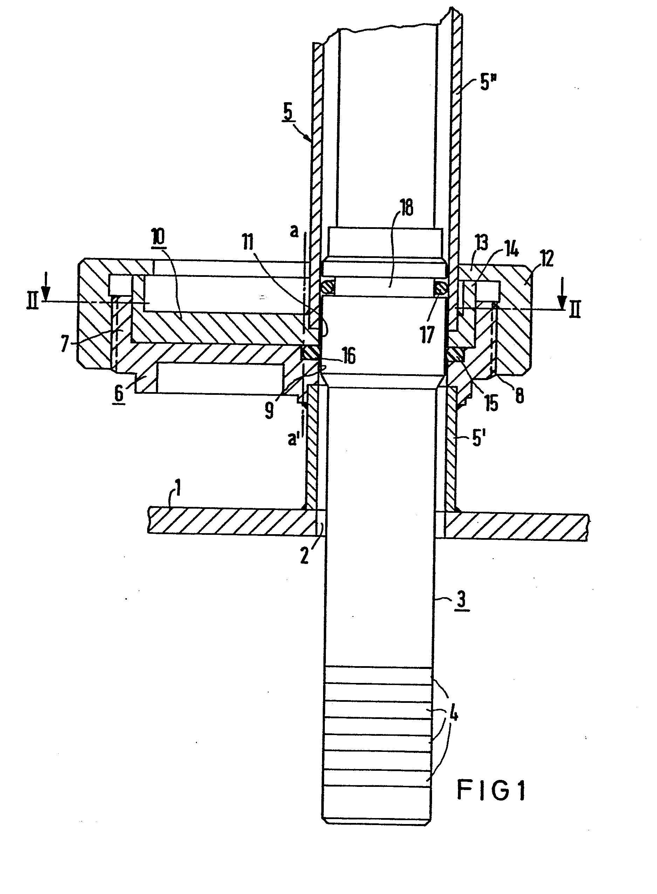

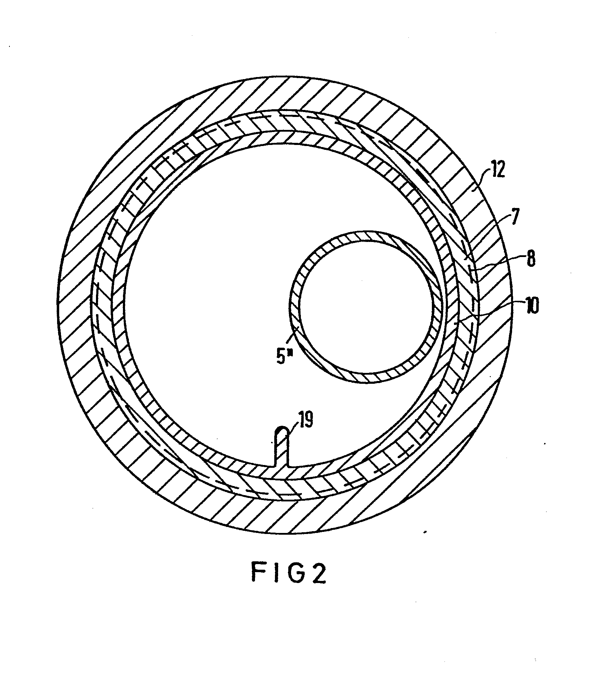

Weitere Vorteile und Merkmale ergeben sich aus der Beschreibung eines in den Figuren 1 und 2 dargestellten Ausführungsbeispiels.

<u>Figur 1:</u> In der Behälterwand 1 eines den Meßstoff umschließenden Behälters oder einer Leitung befindet sich eine Öffnung 2 zur Einführung einer stabförmigen Sonde 3 bzw. eines Eintauchgebers. In dem dargestellten Beispiel ist es ein bekannter Leitfähigkeitsgeber mit vier ringförmigen Streufeldelektroden 4.

Außen auf der Behälterwand 1 ist ein zylindrisches Rohrstück koaxial zu der Öffnung 2 und mit gleichem innerem Durchmesser aufgeschweißt, welches den ersten Rohrabschnitt 5´ eines Führungsrohrs 5 in der Einbauarmatur für die stabförmige Sonde 3 bildet.

Es folgt ein kreisscheibenförmig ausgebildetes Verschlußstück 6 mit zylindrisch hochgezogenem Rand 7, der auf seiner Außenfläche mit Gewinde 8 versehen ist.

Das Verschlußstück 6 weist ferner eine exzentrisch außerhalb seiner Mittelachse a - a´ achsparallel angebrachte

- 3 -       VPA 84 P 4407

kreisförmige Durchbrechung 9 auf, die koaxial mit dem an der Behälterwand 1 angebrachten ersten Rohrabschnitt 5´ des Führungsrohrs 5 verbunden ist.

In das Verschlußstück 6 ist koaxial zu der Mittelachse a - a´ ein scheibenförmiger Drehschieber 10 mit Gleitsitz eingepaßt, welcher sich um die Mittelachse a - a´ drehen läßt und dessen zylindrische Mantelfläche an der Innenfläche des hochgezogenen Rands 7 des Verschlußstücks 6 als Führungsfläche anliegt.

In dem scheibenförmigen Drehschieber 10 ist eine kreisrunde Öffnung 11 exzentrisch derart angebracht, daß sie in einer Schieberstellung, wie in der Figur gezeigt, mit einer Durchbrechung 9 im Verschlußstück 10 fluchtet. Die Öffnung 11 ist mit einem weiteren Abschnitt 5~ des Führungsrohrs 5 verbunden.
Auf das Gewinde 8 des Verschlußstücks 6 läßt sich eine Überwurfmutter 12 aufschrauben, deren radial nach innen gezogener Rand 13 schlüssig auf der Stirnfläche 14 des Drehschiebers 10 aufliegt.
Der Drehschieber 10 weist - wie aus der Figur zu erkennen ist - keine körperliche Achse oder Welle auf und ist deshalb auf einfache Weise herstellbar.

Als elastisches Dichtungsmittel zwischen Verschlußstück 6 und Drehschieber 10 dient ein O-Ring 15, der in einer die Durchbrechung 9 umschließenden Ringnut 16 angebracht ist, deren Wände aus horizontalen und vertikalen Teilflächen von Verschlußstück 6 und Drehschieber 10 gebildet sind.

Ein weiterer O-Ring 17 ist mit einer umlaufenden Nut 18 im Schaft der Sonde 3 angeordnet und dient zur Abdichtung zwischen stabförmiger Sonde 3 und Innenwand des Führungsrohrs 5, hier des Rohrabschnitts 5~.
In der hier gezeigten Arbeitsstellung der Sonde 3 liegt der O-Ring 17 in einer Ebene oberhalb des Drehschiebers 10.

Figur 2 zeigt einen Schnitt in der Ebene I - II durch die Einbauarmatur nach Figur 1.

Man erkennt die Überwurfmutter 12, den hochgezogenen Rand 7 des Verschlußstücks mit dem Außengewinde 8, den Drehschieber 10 und den Rohrabschnitt 5" des Führungsrohrs 5.

Der Übersichtlichkeit halber ist die Sonde 3 nicht eingezeichnet.

Wie der Durchschnitt weiter zeigt, sind die Innendurchmesser der Führungsrohrabschnitte und der Öffnungen im Drehschieber bzw. im Verschlußstück gleich.

Zur Erleichterung der Handhabung beim Drehen des Drehschiebers kann eine nach innen gerichtete Nase 19 vorgesehen werden.

Funktion: Um die Sonde 3 zu Wartungs- oder Austauschzwecken herausziehen zu können, wird als erstes die Überwurfmutter 12 um eine Vierteldrehung gelockert. Der O-Ring 15 zwischen Verschlußstück 6 und Drehschieber 10 wird dabei so weit entspannt, daß er nicht mehr an der Außenfläche der stabförmigen Sonde 3 anliegt. Dann wird die stabförmige Sonde 3 so weit herausgezogen, daß ihre untere Stirnfläche sich oberhalb der Drehschieberebene befindet.

Das Führungsrohr 5 ist so bemessen, daß sich in dieser Stellung der Teil des Schaftes mit dem O-Ring 17 noch innerhalb des Führungsrohrs befindet.

Der Drehschieber 10 wird dann in dem Verschlußstück 6 um 180° gedreht, so daß die Durchbrechung 9 im Verschlußstück 6 verschlossen wird.

Durch Anziehen der Überwurfmutter 12 wird die Dichtung mit dem O-Ring 15 wieder wirksam, so daß der Behälter nach außen abgeschlossen ist und die stabförmige Sonde

vollends aus dem Führungsrohr herausgezogen werden kann.

Beim Einführen der Sonde ist der Funktionsablauf umgekehrt.

2 Patentansprüche
2 Figuren

Patentansprüche

1. Einbauarmatur für stabförmige Sonden, insbesondere als Eintauchgeber ausgebildete Meßwertaufnehmer, mit einem an einer Öffnung in einer Behälterwand angebrachten, aus Abschnitten zusammengesetzten Führungsrohr für die Sonde, mit zwischen den Abschnitten eingefügten Mitteln zum Verschließen des Führungsrohrs,

wobei diese  g e k e n n z e i c h n e t  sind  d u r c h

a) ein scheibenförmiges Verschlußstück (6) mit zylindrisch hochgezogenem Rand (7), der auf seiner Außenfläche mit Gewinde (8) versehen ist, eine exzentrisch außerhalb der Mittelachse (a - a´) des Verschlußstücks (6) achsparallel angebrachte kreisrunde Durchbrechung (9), die koaxial mit dem von der Behälterwand (1) ausgehenden Abschnitt (5´) des Führungsrohrs (5) verbunden ist;

b) ein mit Gleitsitz in dem Verschlußstück (6) koaxial angeordneter scheibenförmiger Drehschieber (10), mit einer exzentrisch angebrachten, in einer Schieberstellung mit der Durchbrechung (9) im Verschlußstück (6) fluchtenden Öffnung (11), die mit dem Rand eines weiteren Abschnitts (5˜) des Führungsrohrs (5) verbunden ist;

c) eine auf das Gewinde (8) des Verschlußstücks (6) aufschraubbare Überwurfmutter (12), deren radial nach innen gezogener Rand (13) mit der oberen Stirnfläche (14) des Drehschiebers (10) in schlüssiger Verbindung steht;

d) elastische Dichtungsmittel (15) zwischen Verschlußstück (6) und Drehschieber (10).

2. Einbauarmatur nach Anspruch 1,  d a d u r c h   g e - k e n n z e i c h n e t ,  daß als elastische Dichtungsmittel vorgesehen sind:

a) ein O-Ring (15) in einer die Durchbrechung (9) umschließenden Ringnut (16), deren Wände aus horizontalen und vertikalen Teilflächen von Verschlußstück
(6) und Drehschieber (10) gebildet sind,

b) ein zwischen dem Schaft der Sonde (3) und der Innenwand des Führungsrohrs (5) in einer Ebene oberhalb
des Drehschiebers (10) angeordneter weiterer
O-Ring (17).

0151285

FIG 1

FIG 2